Europäisches Patentamt

European Patent Office

Office européen des brevets

(19)

(11) Veröffentlichungsnummer: **0 237 827**
**A2**

(12) # EUROPÄISCHE PATENTANMELDUNG

(21) Anmeldenummer: 87102418.8

(22) Anmeldetag: 20.02.87

(51) Int. Cl.³: **C 01 B 33/24**
**C 08 K 7/10, D 21 H 3/78**

(30) Priorität: 20.03.86 DE 3609355

(43) Veröffentlichungstag der Anmeldung:
23.09.87 Patentblatt 87/39

(84) Benannte Vertragsstaaten:
AT BE CH DE ES FR GB GR IT LI LU NL SE

(71) Anmelder: Giulini Chemie GmbH
Giulinistrasse 2
D-6700 Ludwigshafen/Rhein(DE)

(72) Erfinder: Urmann, Ernst, Dr. Dipl.-Chem.
Limesstrasse 3
D-6700 Ludwigshafen (Rhein)(DE)

(72) Erfinder: Potencsik, Istvan, Dr. Dipl.-Chem.
Am Steingarten 6
D-6800 Mannheim(DE)

(72) Erfinder: Kretschmer, Matthias, Dr.Dipl.-Chem.
Rosenstrasse 10
D-6704 Mutterstadt(DE)

(74) Vertreter: Benatzky, Erika, Dr.
Giulinistrasse 2 Postfach 150480
D-6700 Ludwigshafen/Rh.(DE)

(54) Flächenförmig vernetzte Xonolitkristallfasern und ihre Herstellung.

(57) Flächenförmig miteinander vernetzte Xonotlitkristall-fasern für papier-, pappe- oder kartonartige Gebilde werden durch Filtration von in Wasser suspendierten Sekundärteilchen des Xonotlittyps bei einem Druck von 0,5 bis 11,0 MPa hergestellt.

EP 0 237 827 A2

Flächenförmig vernetzte Xonotlitkristallfasern und
ihre Herstellung

Gegenstand der vorliegenden Erfindung sind flächenförmig
vernetzte Xonotlitkristallfasern sowie ihre Herstellung
und Verwendung in papier-, pappe- oder kartonartigen Gebilden.

Xonotlit ist bekanntlich ein Calciumsilikathydrat (Calciumhydrosilikat), das sowohl als Mineral in der Natur
vorkommt als auch durch Hydrothermalsynthese aus calcium-
und siliciumhaltigen Verbindungen hergestellt werden
kann. Es besitzt die Formel
$6 \, CaO \cdot 6 \, SiO_2 \cdot H_2O$ bzw. $Ca_6 \left[ Si_6 O_{17} \right] (OH)_2$ und
zeigt nadelförmige Kristallstruktur.

Weiterhin ist bekannt, daß die bei der hydrothermalen
Synthese gebildeten nadelförmigen Xonotlitkristalle eine
derart hohe Agglomerationsneigung zeigen, daß praktisch
ausschließlich hohlkugelförmige Teilchen mit Sekundärstruktur anfallen. Unvernetzte nadelförmige Kristalle
können auf hydrothermalem Wege nur sehr schwierig, wenn
überhaupt, hergestellt werden.

Es ist nicht überraschend, daß die Anwendungsgebiete der
wasserhaltigen Calciumsilikate, insbesondere Calciumsilikate des Xonotlittyps, weitestgehend von der Struktur der Sekundärpartikel bestimmt werden. Hohlkugelförmige Sekundärpartikel haben eine geringe Dichte und weisen eine für viele Zwecke ausreichende mechanische
Festigkeit auf. Sie sind wegen dieser Struktur besonders zur Herstellung von leichtgewichtigen thermischen
Isolierkörpern geeignet. Als verstärkende Füllstoffe in
Kunststoffen, papier-, pappen- und kartonartigen Gebilden

- 2 -

werden dagegen die hohlkugelartigen Sekundärteilchen nicht eingesetzt.

Hohlkugelförmige Sekundärteilchen sind gegenüber mechanischer Beanspruchung sehr stabil. Dagegen soll gemäß CA 96 (1982) 204503h ein Teil der Sekundärteilchen durch Säurebehandlung, wahrscheinlich Herauslösen von Calcium, zerstört werden.

Xonotlitteilchen mit der vorerwähnten Sekundärstruktur sind ausführlich beschrieben in der US-PS 4 162 924. Demnach entstehen bei der hydrothermalen Synthese aus Calciumoxid, Siliciumdioxid und Wasser hohlkugelförmige Sekundärpartikel, die aus nadel- bis faserförmigen miteinander verfilzten und vernetzten Xonotlitprimärkristallen aufgebaut sind.

Die Herstellung von kristalline Calciumhydrosilikate, insbesondere Xonotlite, enthaltenden thermischen Isolierkörpern und Baumaterialien geringer Dichte ist auch bereits Gegenstand zahlreicher Patente und Patentanmeldungen. In Abhängigkeit von den Verfahrensparametern können die bekannt gewordenen Herstellungsprozesse in zwei Gruppen eingeteilt werden:

a)    die Ausgangsstoffe ( CaO, $SiO_2$, $H_2O$) werden unter Bildung einer kristallinen Calciumhydrosilikataufschlämmung hydrothermal umgesetzt, anschließend geformt und getrocknet. Vor oder nach der hydrothermalen Umsetzung werden der Suspension üblicherweise noch faserförmige Stoffe zur Erhöhung der mechanischen Festigkeit zugesetzt. Ein derartiges Verfahren ist z.B. Gegenstand der US-PS 3 816 149 und DE-PS 2 953 526.

- 3 -

b) die Ausgangsstoffe (CaO, $SiO_2$, $H_2O$) werden zu einem amorphen Calciumsilikatgel umgesetzt, das anschließend in einer Form im Autoklaven gehärtet wird, wobei das kristalline Calciumhydrosilikat entsteht, das üblicherweise Tobermorit und/oder Xonotlit ist. Auch werden hier dem Gel oder der Ausgangsmischung faserförmige Materialien zur Festigkeitssteigerung zugesetzt. Die Tobermorit- bzw. Xonotlitkristallbildung erfolgt demnach erst im Formkörper. In der US-PS 3 317 643 und EU-A 0 033 522 sind Prozesse vorstehender Art beschrieben.

In der DE 33 06 528 A1 wird bereits vorgeschlagen, nadelförmige Xonotlitkristalle eines bestimmten Längen-Breiten-Verhältnisses in papier-, karton- oder pappenartigen Werkstoffen als Füllstoff zu verwenden. Die erzielte Gefügefestigkeit der Werkstoffe wird dabei der Wasserstoffbrückenbindungsfähigkeit des Restfeuchte enthaltenden Xonotlits zugeschrieben. Eigene Versuche haben nunmehr gezeigt, daß hohlkugelförmige Sekundärteilchen, die aus den nadelförmigen Xonotlitkristallen gemäß DE 33 06 528 A1 bestehen, zur Verbesserung der Gefügefestigkeit in papier-, karton- oder pappenartigen Werkstoffen wenig geeignet sind.

Es stellte sich somit die Aufgabe, ein technisch brauchbares Verfahren zur Gewinnung von nicht hohlkugelförmigen Xonotlitteilchen zu finden, die zur Erhöhung der Gefügefestigkeit von flächenförmigen Gebilden besser geeignet sind als die hohlkugelförmigen.

- 4 -

Es wurde zwar bereits verschiedentlich versucht, die Bildung der Sekundärteilchen bei der hydrothermalen Synthese zu verhindern. Nach CA 89 (1978) 75913w soll dies möglich sein, wenn die hydrothermale Synthese in Gegenwart von organischen Silikonen erfolgt. Das erhaltene Xonotlitpulver soll sich als Füllstoff in Kunststoffen besser dispergieren lassen. Andere organische und anorganische Zusätze sind für den angegebenen Zweck ebenfalls schon getestet worden. Es hat sich jedoch gezeigt, daß die Oberflächeneigenschaften der gebildeten Calciumhydrosilikate durch derartige Maßnahmen erheblich verändert werden. Oft erhält man dabei auch lediglich kleinere Sekundärpartikel.

Überraschenderweise kann die gestellte Aufgabe derart gelöst werden, daß die in Wasser suspendierten Sekundärteilchen vom Xonotlittyp bei einem Druck von 0,5 bis 11,0 MPa, insbesondere 1,6 bis 3,0 MPa, filtriert und dabei desagglomeriert werden. Insbesondere war hierbei nicht vorhersehbar, daß bei dieser Druckbehandlung unbeschädigte Primärkristalle erhalten werden die untereinander flächenförmig vernetzt sind.

Nach einer besonders vorteilhaften Ausführungsform der Erfindung wird die Xonotlit-Suspension vor der Druckentwässerung erst einer Scherkräftebehandlung unterzogen, beispielsweise in einem schnell laufenden Homogenisator. Als Homogenisator ist beispielsweise ein Dispergiergerät geeignet, das nach dem Rotor-Stator-Prinzip arbeitet. Hierbei findet eine teilweise Desagglomeration an der Oberfläche der Sekundärteilchen ohne Zerstörung der Primärkristalle statt. Anschließend wird die vorbehandelte Suspension noch der Druckentwässerung

- 5 -

unterworfen. Bei der Entwässerung unter hohem Druck können Feststoffgehalte bis zu 40 Gew.% erhalten werden. In den meisten Fällen ist ein Feststoffgehalt im Filterkuchen von 28 bis 36 Gew.% ausreichend.

Geeignete Vorrichtungen zur Filtration und Desagglomeration der Sekundärpartikel sind Filterpressen bekannter Bauart, z.B. Membranfilterpressen, Röhrenfilterpressen, Bandfilterpressen, Kammerfilterpressen u.a. Trennaggregate, z.B. Zentrifugen.

Die bei der Druckentwässerung erhaltenen flächenförmig vernetzten Xonotlitkristalle sind neu. Sie sind zur Verstärkung von bahnförmigen oder folienartigen Flächengebilden aus Kunststoff, Papier und Pappe wegen ihrer festigkeitssteigernden Wirkung hervorragend geeignet. Außerdem bewirken sie eine schwere Entflammbarkeit der Flächengebilde.

Die Breite der flächenförmig vernetzten Primärkristalle ist meistens kleiner als 1 μm und die Länge kleiner als 5 μm. Dabei kann die BET-Oberfläche 30 bis 120, vorzugsweise 60 bis 100 m²/g betragen.

Anhand der nachstehenden Beispiele wird der Erfindungsgegenstand zunächst näher erläutert.

Beispiel 1

In einem Autoklav wurde aus einer wäßrigen Suspension von Calciumoxid und amorpher Kieselsäure (Molverh. 1,05 : 1 ; Wasser-Feststoffverh. 16 : 1) unter Rühren in an sich bekannter Weise Xonotlit hergestellt. Die

- 6 -

Temperatur betrug 200°C, der Druck im Autoklav entsprach dem Gleichgewichtsdampfdruck des gesättigten Wasserdampfes bei der vorstehenden Reaktionstemperatur (= 1,6 MPa Dampfdruck). Die Reaktionszeit betrug 2 Stunden.

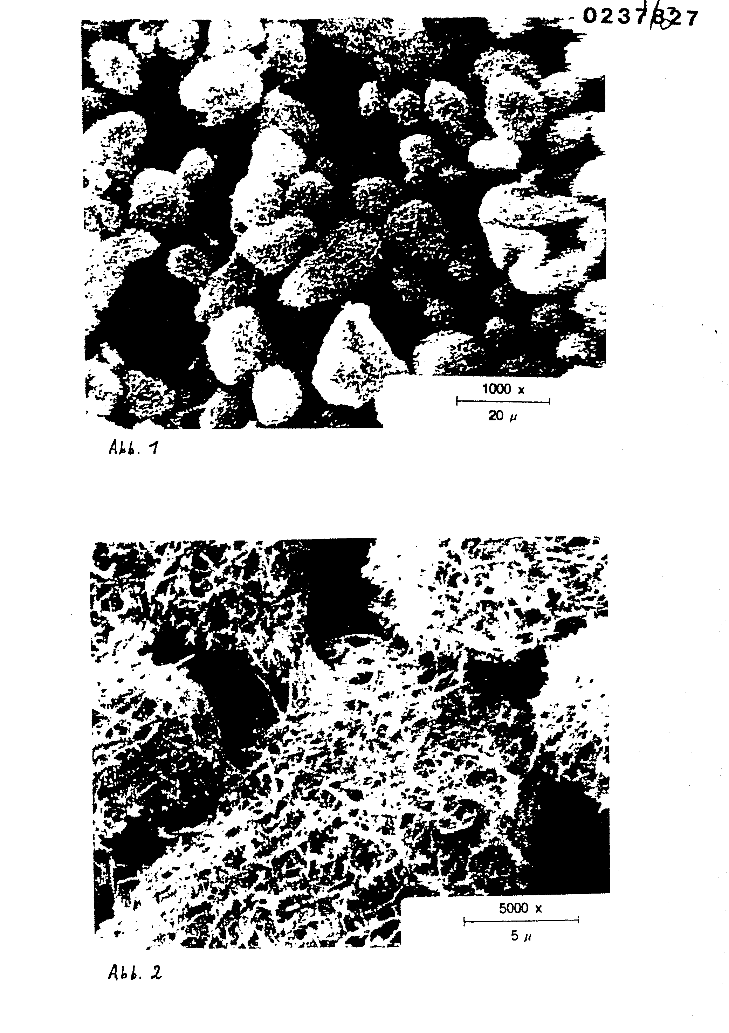

Der Feststoffgehalt der gebildeten Xonotlitsuspension betrug 6 Gew.%. Die Xonotlitteilchen wurden im Wasserstrahlvakuum abgenutscht und der Feststoffgehalt im Filterkuchen an mehreren Proben bestimmt. Er lag bei 10 bis 12 Gew.%, bezogen auf den feuchten Filterkuchen. Gibt man dem Filterkuchen unter Rühren in einen mit Wasser gefüllten Behälter, so stellt man fest, daß der Filterkuchen zu einer stabilen Suspension redispergierbar ist. Die Abbildungen 1 und 2 zeigen, daß der Filterkuchen fast ausschließlich aus kugelförmigen Sekundärpartikeln besteht, die isoliert nebeneinander liegen.

Beispiel 2

Die im Beispiel 1 erzeugte Xonotlit-Suspension wurde mit Wasser auf etwa das Doppelte verdünnt. Die Feststoffkonzentration der Verdünnung lag bei 2,9 Gew.%.

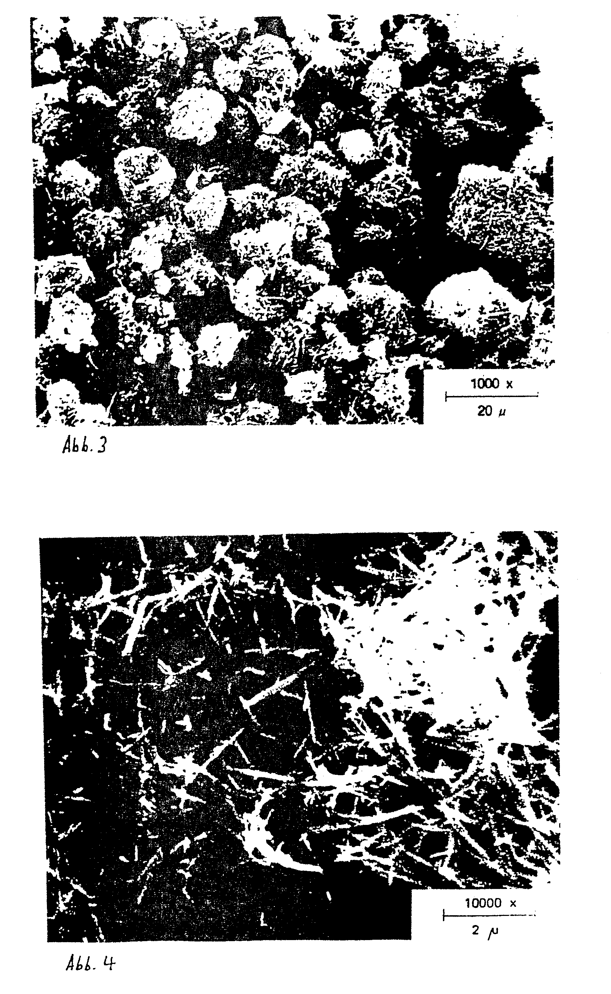

Die verdünnte Suspension wurde 5 Minuten mit einem Homogenisiergerät Ultraturrax T 45 ®́ unter Ausübung hoher Scherkräfte gerührt. Die Scherkräfte bewirken, wie die REM-Aufnahme 3 zeigt, lediglich an den Rändern der 20 bis 50 µm großen Sekundärpartikel eine Veränderung, und zwar wird eine stärkere Vernetzung miteinander der im wesentlichen intakt gebliebenen kugelförmigen Sekundärteilchen erzielt. Aus der Abbildung 4 ist deutlich zu erkennen, daß durch die Scherkräfte die Primärkristalle nicht zerstört werden.

- 7 -

## Beispiel 3

Eine nach Beispiel 1 hergestellte Suspension wurde in ein beidseitig entwässerndes Preßwerkzeug gefüllt, und unter einem Druck von 3,0 MPa, der über einen Zeitraum von 30 Minuten aufrecht erhalten wurde, entwässert. Der Feststoffgehalt des feuchten Filterkuchens stieg in dieser Zeit auf 30 Gew.% an. Der Filterkuchen ist in Wasser zu einer stabilen Suspension redispergierbar, was für die vorgesehene Anwendung von besonderem Vorteil ist, z.B. zu einer stabilen Suspension mit 6 % Feststoffgehalt.

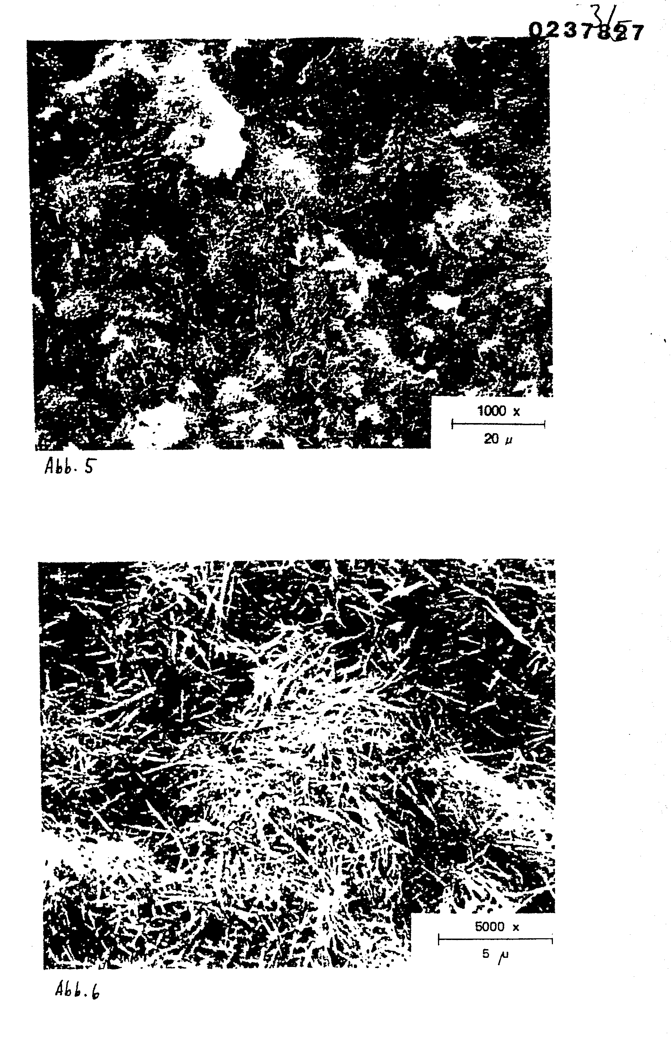

Abbildung 5 zeigt, daß bei der Entwässerung die Sekundärteilchen desagglomeriert werden und sich die gebildeten Primärkristalle unmittelbar nach ihrer Desagglomeration in einer Ebene neu vernetzen und verfilzen.

Abbildung 6 zeigt schließlich noch, daß bei der Druckentwässerung die Primärkristalle intakt bleiben. Zu dem gleichen Ergebnis führt auch die Bestimmung der spez. Oberfläche vor und nach der Druckentwässerung.

## Beispiel 4

Eine nach Beispiel 1 hergestellte Xonotlit-Suspension mit kugelförmigen Sekundärpartikeln wurde in einem doppelseitig entwässernden Preßwerkzeug unter einem Druck von 2,5 MPa entwässert. Der Feststoffgehalt des Filterkuchens betrug nach Filtrationsende 28,5 Gew.%.

- 8 -

Der im Beispiel 1 enthaltene Filterkuchen mit kugelförmigen Sekundärteilchen, hier auch als FK 1 bezeichnet, wurde in Wasser verrührt. Ebenso wurde der im Beispiel 4 hergestellte Filterkuchen (FK 2), der in der Ebene vernetzt ist und einen Wassergehalt von 28,5 Gew.% aufweist, in Wasser suspendiert. Der Feststoffgehalt beider Suspensionen betrug 0,125 Gew.%.

195 ml Proben der Suspensionen wurden in 250 ml - Meßzylinder gefüllt und mit 5 ml einer 0,034 molaren Aluminiumsulfatlösung ($Al_2(SO_4)_3 \cdot 18 H_2O$) versetzt. Die vorstehenden beiden Suspensionen wurden hinsichtlich ihres Sedimentationsverhaltens untersucht. Anschließend wurden diese Proben wie die entsprechenden Blindproben (200 ml ohne Zusatz von Aluminiumsulfat) auf einem Weißbandfilter von 12,5 cm Durchmesser in einer Porzellannutsche abgesaugt. Die bis zum vollständigen Absaugen erforderliche Zeit wurde gemessen. Für jeden Versuch war ein konstantes Vorvakuum eingestellt worden ($2,7 \cdot 10^3$ Pa).

| Ergebnis: | a) | b) | c) |
|---|---|---|---|
| FK 1 | 200 | - | 55 |
| FK 1 | 140 | + | 23 |
| FK 2 | 200 | - | 130 |
| FK 2 | 196 | + | 31 |

a) Sedimentvolumen nach 90 Min. in ml

b) Aluminiumsulfat

c) Absaugzeit in sec.

- 9 -

An dieser Stelle ist bemerkenswert, daß durch die Aluminiumsulfatzugabe das Sedimentationsverhalten der aus FK 2 hergestellten Suspension praktisch nicht beeinflußt wird.

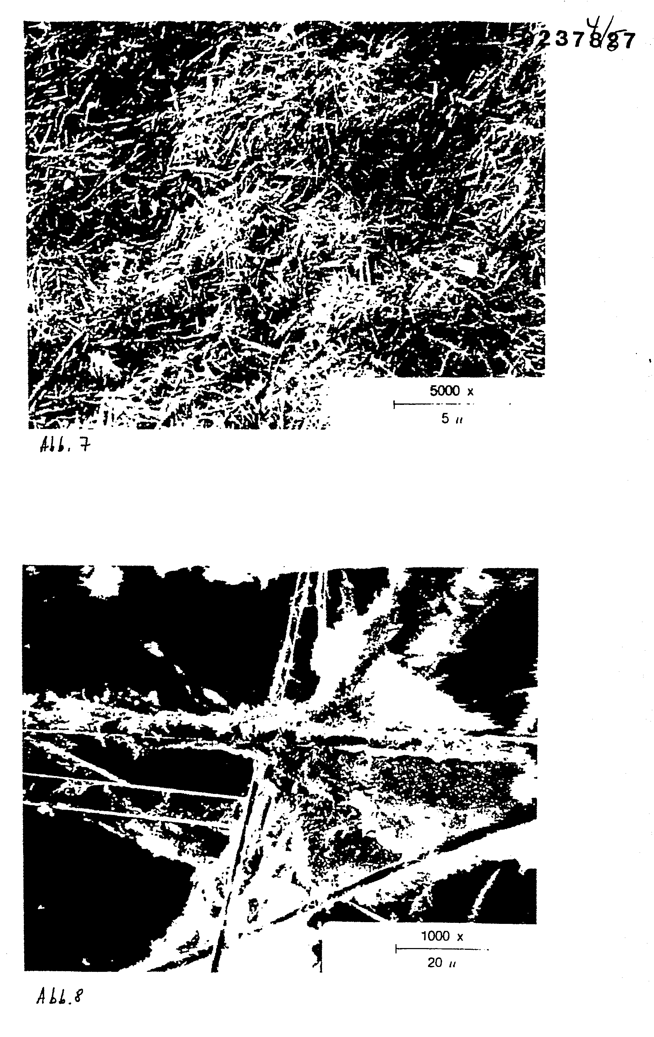

Nach Beendigung des Saugvorganges wurden die Filterpapiere bei 105°C getrocknet. Überraschenderweise bildeten die getrockneten FK 1 eine poröse, mit zahlreichen Rissen durchzogene Schicht auf dem Filterpapier, die nur in Form kleiner Bruchstücke vom Filter ablösbar war (Bruchstücke: 3 bis 5 mm² groß). Im Gegensatz hierzu zeigten die Filterkuchen FK 2 keine Risse. Die getrockneten FK 2 ließen sich außerdem als unzerstörte Blätter vom Filterpapier abheben. Abbildung 7 zeigt eine REM-Aufnahme in 5000 -facher Vergrößerung. Es sind nur noch flächenförmig miteinander vernetzte und verfilzte Xonotlit-Primärkristalle vorhanden.

Ein weiterer Gegenstand der Erfindung ist die Verwendung der flächenförmig vernetzten Xonotlitkristallfasern in papier-, pappe- oder kartonartigen Gebilden.

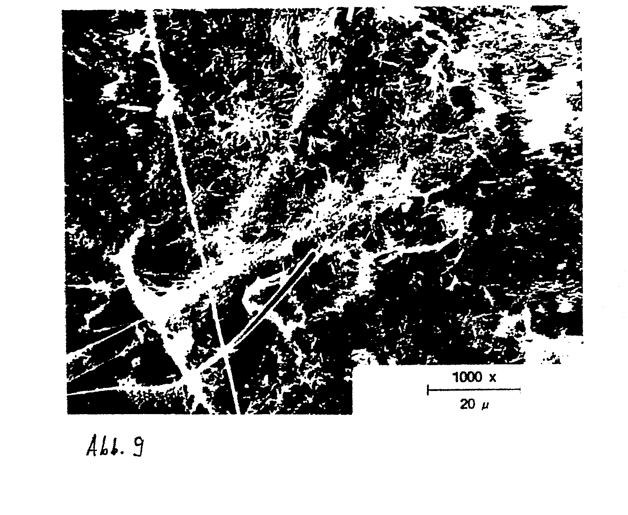

Werden die flächenförmig vernetzten Xonotlitkristallfasern gemäß der Erfindung mit Glasfasern in Wasser suspendiert, und die gebildete Suspension abgenutscht, so entstehen flächenförmige Gebilde deren Struktur in den Abbildungen 8 + 9 gezeigt wird. Man sieht deutlich die Umhüllung der Glasfasern durch die Xonotlit-Primärteilchen. Sie ergeben einen weit besseren Kontakt mit den Glasfasern als hohlkugelförmig vernetzte Primärteilchen. Das neue, flächenförmig vernetzte Xonotlit fungiert also nicht lediglich als Füllstoff, sondern bewirkt erst die Festigkeit des Gesamtgebildes.

- 10 -

Die festigkeitssteigernde Wirkung der flächenvernetzten Xonotlitkristalle ist bei allen bahnförmigen und
folienförmigen Gebilden zu beobachten, insbesondere
auch bei anorganischen, vergleichsweise dünnen Gebilden, die auf herkömmlichen Papiermaschinen erzeugt werden können.

Patentansprüche

1. Xonotlit, gekennzeichnet durch flächenförmig miteinander verfilzte und vernetzte Primärkristalle.

2. Xonotlit nach Anspruch 1, dadurch gekennzeichnet, daß die Primärkristalle eine Länge kleiner 5 µm, eine Breite kleiner 1 µm und eine spezifische Oberfläche nach BET von 30 bis 120 m²/g aufweisen.

3. Verfahren zur Herstellung von Xonotlit nach den Ansprüchen 1 und 2, dadurch gekennzeichnet, daß in Wasser suspendierte Sekundärteilchen des Xonotlittyps bei einem Druck von 0,5 bis 11,0 MPa, insbesondere 1,6 bis 3,0 MPa, filtriert und dabei desagglomeriert werden.

4. Verfahren nach Anspruch 3, dadurch gekennzeichnet, daß die in Wasser suspendierten Sekundärteilchen vor der Druckentwässerung geschert werden.

5. Verfahren nach Anspruch 4, dadurch gekennzeichnet, daß die suspendierten Sekundärteilchen mit einem Homogenisiergerät geschert werden.

6. Verwendung der Xonotlitkristalle nach Anspruch 1 zur Verstärkung von bahnförmigen und folienartigen Flächengebilden aus Kunststoff, Papier, Karton und Pappe.

Abb. 1

Abb. 2

Abb. 3

Abb. 4

Abb. 5

1000 x
20 μ

Abb. 6

5000 x
5 μ

Abb. 7

Abb. 8

1000 x

20 μ

Abb. 9